# EUROPEAN PATENT SPECIFICATION

(11) **EP 0 422 528 B1**
(45) Date of publication and mention of the grant of the patent: **22.12.1993**
(21) Application number: 90119181.7
(22) Date of filing: 05.10.1990
(51) Int. Cl.: F16D 27/14, F16D 27/112

(54) **Electromagnetic clutch**
Elektromagnetische Kupplung
Embrayage électromagnétique

(30) Priority: 13.10.1989 JP 119153/89 U
(43) Date of publication of application: 17.04.1991
(73) Proprietor: SANDEN CORPORATION, Isesaki-shi Gunma, 372 (JP)
(72) Inventor: Kakinuma, Katsuhiko, c/o Sanden Corporation, Isesaki-shi, Gunma, 372 (JP)
(74) Representative: Prüfer, Lutz H., Dipl.-Phys.

(56) References cited:
- FR-A- 2 008 175
- US-A- 2 377 046
- US-A- 3 434 747
- PATENT ABSTRACTS OF JAPAN, vol. 9, no. 333 (M-443)[2056], 27th December 1985;& JP-A-60 164 018 (HITACHI) 27-08-1985

## Description

### 1. Field of The Invention

This invention generally relates to an electromagnetic clutch, such as for use in controlling the transmission of power from an automobile engine to a refrigerant compressor in an automobile air conditioning system, and more particularly, to the construction of a driven mechanism of the electromagnetic clutch.

### 2. Description of The Prior Art

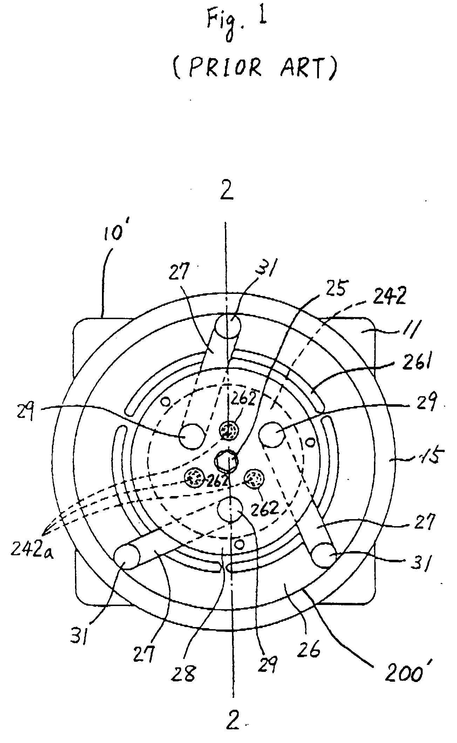

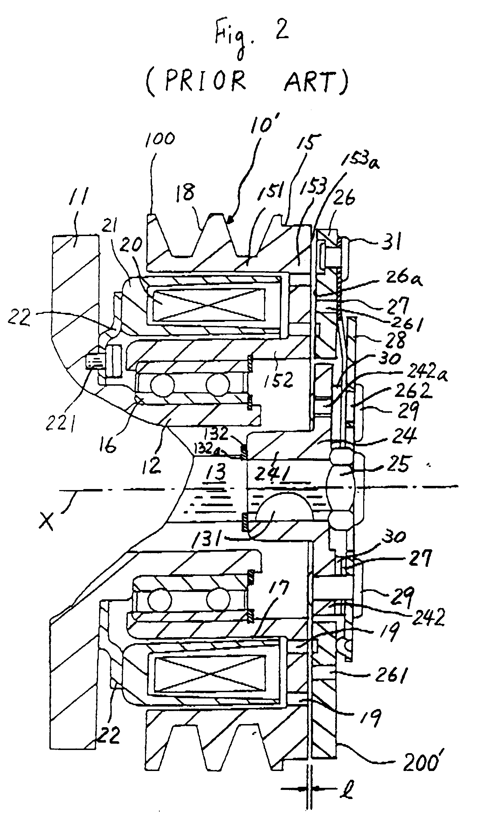

Referring to Figures 1 and 2, one prior art embodiment of an electromagnetic clutch is shown. For purposes of explanation only, the right side of Figure 2 will be referenced as the forward end or front and the left side of Figure 2 will be referenced as the rearward end or rear. Electromagnetic clutch 10' is intended to be coupled to a refrigerant compressor in an automobile air conditioning system. Compressor housing 11 is provided with a cantilevered tubular extension 12 surrounding an extension of drive shaft 13 of the compressor. Drive shaft 13 is rotatably supported in the compressor housing 11 by bearings (not shown). Axis X is the horizontal axis about which hub 24, armature plate 26, and clutch rotor 15 rotate.

Clutch rotor 15 is rotatably supported on tubular extension 12 through bearing 16 which is mounted on the outer surface of tubular extension 12. Clutch rotor 15 is made of magnetic material, such as steel, and comprises outer annular cylindrical portion 151, inner annular cylindrical portion 152 and axial end plate portion 153, which connects outer and inner cylindrical portions 151 and 152 at the axial forward end. Annular U-shaped cavity 17 is defined by portion 151, 152 and 153. A plurality of V-shaped grooves 18 are provided on the outer peripheral surface of outer annular cylindrical portion 151 for receiving a belt (not shown) to couple the compressor to the output of the automobile engine (not shown).

Axial end plate portion 153 includes one or more concentric slits 19 which are disposed on one or more concentric circles. These slits 19 define a plurality of annular or arcuate magnetic pieces with the surface of the poles being on the axial end plate portion 153.

Electromagnetic coil 20 is disposed in annular cavity 17 of clutch rotor 15 to supply magnetic flux (not shown) for attracting armature plate 26 to axial end plate portion 153 of rotor 15. Coil 20 is contained within annular magnetic housing 21 having a U-shaped cross section. Housing 21 is fixed to supporting plate 22, which is secured to the axial end surface of compressor housing 11 by a plurality of rivets 221. A small air gap is maintained between coil housing 21 and clutch rotor 15.

Rotor 13, coil 20, housing 21 and bearing 16 substantially constitute driving mechanism 100.

Hub 24 is disposed on the terminal end portion of drive shaft 13. Hub 24 comprises tubular member 241 which is secured on the terminal end portion of drive shaft 13 by the forcible insertion and flange portion 242 which extends radially from the axial end of tubular member 241. The relative rotation between hub 24 and drive shaft 13 is prevented by key-keyway mechanism 131 provided at the terminal end portion of drive shaft 13. Hub 24 is firmly secured to the terminal end portion of drive shaft 13 by screwing up nut 25 on an outermost axial end portion of drive shaft 13. Annular shim 132 is disposed between a rearward end of tubular member 241 of hub 24 and annular ridge 132a is formed at an outer peripheral surface of the terminal end portion of drive shaft 13 to adjust later-mentioned axial air gap "1" between annular armature plate 26 and axial end plate portion 153 of rotor 15. Flange portion 242 is integrally formed with tubular member 241. Alternatively, flange portion 242 may be formed separately from the tubular member 241 and fixed on the tubular member 241 by any known securing method, for example, by welding.

Annular armature plate 26 is composed of magnetic material, is concentric with hub 24 and faces the axial end plate portion 153 with a predetermined axial air gap "1" therebetween. Armature plate 26 is elastically connected of flange portion 242 of hub 24 through a plurality of leaf springs 27. Armature plate 26 includes friction surface 26a which faces friction surface 153a of axial end plate portion 153 of rotor 15 and one concentric slit 261 which are disposed in concentric circles. Stopper plate 28 and one end of each leaf spring 27 are firmly secured by rivets 29 to the outer surface of flange portion 242 through spacing member 30. The other end of each leaf spring 27 is fixed to armature plate 26 by rivet 31 to support armature plate 26 flexibly for axial movement upon deflection of leaf spring 27.

Hub 24, leaf springs 27, stopper plate 28 and armature plate 26 substantially constitute driven mechanism 200'.

Thus, when electromagnetic coil 20 is energized, armature plate 26 is attracted to axial end plate portion 153 of rotor 15, and thus friction surfaces 26a and 153a engage each other. Drive shaft 13 is then rotated together with rotor 15 by the engine output through leaf spring 27 and hub 24.

When electromagnetic coil 20 is not energized, armature plate 26 is separated from rotor 15 due to the elasticity of leaf springs 27. Rotor 15 is thus rotated by the engine output, but the compressor is not driven.

Furthermore, in this prior art embodiment, since tubular member 241 of hub 24 is firmly secured on the terminal end portion of drive shaft 13 by the forcible insertion, the driven mechanism, specifically, tubular member 241 of hub 24 can be hardly detached from the terminal end portion of drive shaft 13 by hand after detaching nut 25 from the outermost axial end portion of drive shaft 13.

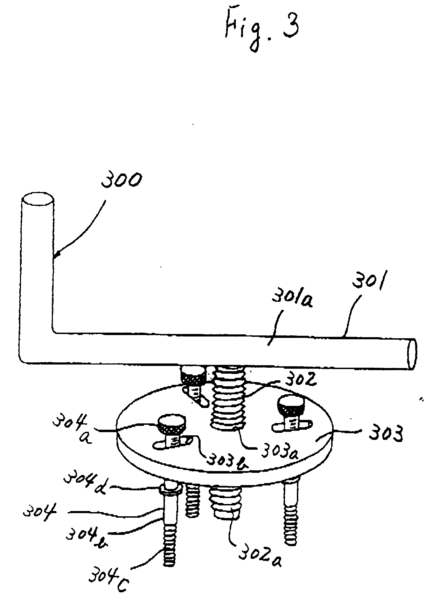

Therefore, tool 300 as shown in Figure 3, must be prepared to easily detach tubular member 241 of hub 24 from the terminal end portion of drive shaft 13. Tool 300 includes L-shaped cylindrical steel bar 301, rod 302 having male screw portion 302a which locates along its entire length and circular plate 303 having the threaded hole 303a at its center. One end portion of rod 302 is fixedly attached to a center of longer straight portion 301a of L-shaped cylindrical steel bar 301 by any securing method, for example, by welding. Rod 302 screws through the threaded hole 303a. A plurality of identical elliptic slots 303b are bored through circular plate 303. Identical elliptic slots 303b radially locate with an equiangular interval. In this prior art embodiment, three identical slots 303b are bored through circular plate 303. Tool 300 further includes three identical bolts 304 having bolt head 304a and shaft region 304b which includes male screw portion 304c along one-third of its length and loosely penetrates through each of slots 303b. However, the radial movement of bolt 304 is restricted within slot 303b and the axial movement of bolt 304 is restricted by bolt head 304a and flange portion 304d formed at the center of shaft region 304b of bolt 304.

Referring to Figures 1 and 2 again, in order to serve for use of tool 300, a plurality of identical threaded holes 242a are bored through flange portion 242 of hub 24. In this prior art embodiment, three identical threaded holes 242a are bored through flange portion 242. Theses three threaded holes 242a locate with equiangular interval. Furthermore, with aligning with holes 242a, identical three holes 262 are bored through stopper plate 28.

In the above-mentioned construction of the driven mechanism, tool 300 is used in the following manner. After detaching nut 25 from the outermost terminal end portion of drive shaft 13, first, a bottom end surface of rod 302 is contacted with the outer axial end surface of drive shaft 13 so as to be perpendicular to an outer end surface of stopper plate 28. Then, male screw portion 304c of bolts 304 contemporarily screws into each of threaded holes 242a through each of holes 262. Next, shaft portion 302a of rod 302 further screws through threaded hole 303a by rotating longer straight portion 301a of L-shaped cylindrical steel bar 301, thereby inwardly pushing the outer axial end surface of drive shaft 13. Finally, the driven mechanism, specifically, tubular member 241 of hub 24 is detached from the terminal end portion of drive shaft 13 by virtue of the relative axial movement between drive shaft 13 and hub 24.

However, in this prior art embodiment, the waterdrops outside the electromagnetic clutch are easily led through holes 262 and 242a to bearing 16 which is mounted on the outer surface of tubular extension 12. Therefore, corrosion of bearing 16 is remarkably enhanced so that the life of the electromagnetic clutch is remarkably decreased.

Accordingly, it is an object of this invention to prevent an internal bearing element of an electromagnetic clutch from enhancing corrosion thereof due to the water entering from the outside electromagnetic clutch, thereby eliminating decrease in the life of the electromagnetic clutch.

An electromagnetic clutch according to the invention is indicated in the claim.

Figure 1 illustrates a side view of an electromagnetic clutch in accordance with one embodiment of a prior art.

Figure 2 illustrates a vertical sectional view taken on line 2-2 of Figure 1.

Figure 3 illustrates a perspective view of a tool used for detaching a driven mechanism from a drive shaft.

Figure 4 illustrates a side view of an electromagnetic clutch in accordance with a first embodiment of the present invention.

Figure 5 illustrates a vertical sectional view taken on line 5-5 of Figure 4.

Figure 6 illustrates a side view of an electromagnetic clutch in accordance with a second embodiment of the present invention.

Figure 7 illustrates a vertical sectional view taken on line 7-7 of Figure 6.

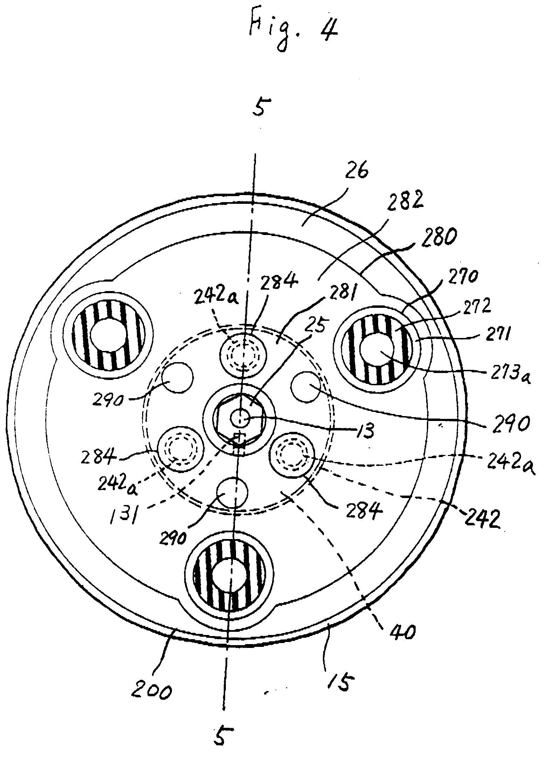

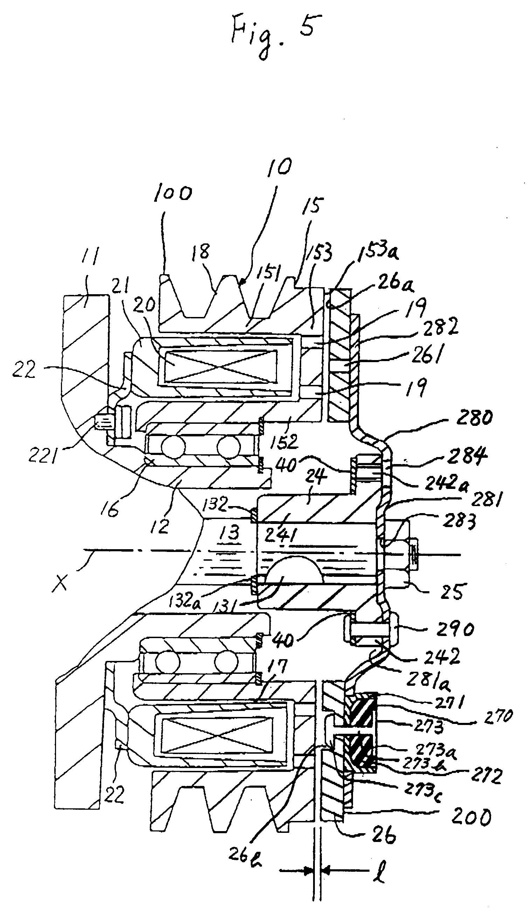

Referring to Figures 4 and 5, an electromagnetic clutch in accordance with a first embodiment of the present invention is shown. For purposes of explanation only, the right side of Figure 5 will be referenced as the forward end or front and the left side of Figure 5 will be referenced as the rearward end or rear. In Figures 4 and 5, the same numerals are used to denote the corresponding elements shown in Figures 1 and 2, thus an explanation thereof is omitted.

Referring to Figures 4 and 5, driven mechanism 200 of an electromagnetic clutch includes armature plate 26, circular plate 280 located at a front of armature plate 26, a plurality of identical damper assemblies 270 located at a front end surface of circular plate 280 and annular plate 40 located at a rear end surface of flange portion 242 of hub 24. Circular plate 280 comprises shallow cup-shaped region 281 defining indent 281a at its rearward side and annular region 282 radially extending from a periphery of shallow cup-shaped region 281. A rear end surface of annular region 282 is in contact with an end surface of armature plate 26 opposite to friction surface 26a. A rear end surface of shallow cup-shaped region 281 is in contact with an outer axial end surface of flange portion 242 of hub 24.

Damper assemblies 270 locate at the front end surface of annular region 282 with an equiangular interval. In this embodiment, three identical damper assemblies 270 locate at the front end surface of annular region 282 with an equiangular interval. Damper assembly 270 includes U-shaped casing 271 open to the forward side, annular elastic member 272, for example a rubber member disposed within U-shaped casing 271 and rivet 273 having elongated flange portion 273a at its forward end. Elastic member 272 is fixed to an inner surface of casing 271. Shaft portion 273b of rivet 273 axially penetrates through annular elastic member 272, a bottom of casing 271 and armature plate 26, and is caulked at its rearward end so as to generate the slight compressive deformation of rubber member 272 in an axial direction. Caulked portion 273c at the rearward end of shaft portion 273b of rivet 273 is disposed within cylindrical cavity 26b formed in friction surface 26a of armature plate 26.

Circular plate 280 is provided with hole 283 bored through a center of shallow cup-shaped region 281 so as to be penetrated a terminal end portion of drive shaft 13 therethrough. Hub 24 and circular plate 280 are fixedly secured to the terminal end portion of drive shaft 13 by screwing up nut 25 on an outermost axial end portion of drive shaft 13.

As previously mentioned in the prior art embodiment, a plurality of identical threaded holes 242a are bored through flange portion 242 of hub 24. In this embodiment, three identical threaded holes 242a are bored through flange portion 242. These three identical threaded holes 242a locate with equiangular interval. With aligning with holes 242a, three identical holes 284 are bored through a circumferential portion of shallow cup-shaped region 281. These holes 242a and 284 are served for use of previously mentioned tool 300. A manner of using tool 300 is similar to the manner described in the prior art embodiment so that an explanation thereof is omitted.

Annular plate 40 is disposed at a rear end surface of flange portion 242 of hub 24 so as to cover a rear end opening of holes 242a. Annular plate 40 and circular plate 280 are firmly secured by rivets 290 to both the rear and front surfaces of flange portion 242, respectively.

In this construction, when electromagnetic coil 20 is energized, armature plate 26 is attracted to axial end plate portion 153 of rotor 15 by the magnetic flux which is caused by the energization of coil 20, and elastic member 272 is further compressed in the axial direction. Therefore, the rotating movement of the automobile engine is transmitted to drive shaft 13 through rotor 15, armature plate 26, damper assemblies 270, circular plate 280 and hub 24. On the other hand, if coil 20 is not energized, armature plate 26 is separated from axial end plate portion 153 of rotor 15 by the recoil strength of elastic member 272 for maintaining small air gap "1" between armature plate 26 and axial end plate portion 153.

At the moment armature plate 26 contacts axial end plate portion 153 of rotor 15, elastic member 272 receives the impact force caused by the torque of U-shaped casing 271. However, the impact force is eased by the axial compressive deformation and the shearing deformation of elastic member 272.

Since annular plate 40 is disposed at a rear end surface of flange portion 242 of hub 24 so as to cover a rear end opening of holes 242a, the water entering from the outside electromagnetic clutch through holes 284 and 242a is blocked by annular plate 40. Thereby, preventing bearing 16 mounted on the outer surface of tubular extension 12 from enhancing corrosion thereof so that decrease in the life of the electromagnetic clutch is eliminated.

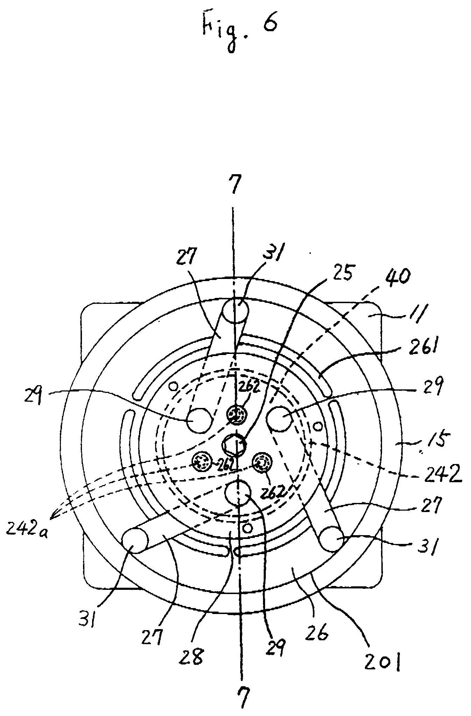

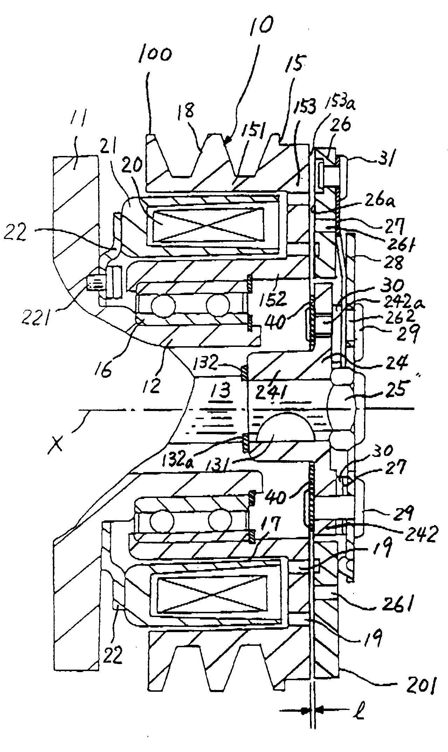

Figures 6 and 7 illustrates an electromagnetic clutch in accordance with a second embodiment of the present invention. In Figures 6 and 7, the same numerals are used to denote the corresponding elements shown in Figures 1 and 2, thus an explanation thereof is omitted. In this embodiment, driven mechanism 201 includes annular plate 40 disposed at a rear end surface (to the left in Figure 7) of flange portion 242 of hub 24 so as to cover a rear end opening of threaded holes 242a. Annular plate 40 is firmly secured to the inner surface of flange portion 242 when stopper plate 28 and one end of each leaf spring 27 are firmly secured by rivets 29 to the front end surface of flange portion 242 through spacing member 30.

An effect of this embodiment is similar to the effect of the first embodiment so that an explanation thereof is omitted.

## Claims

1. An electromagnetic clutch, including a first rotatable member having an axial end plate (153) of magnetic material, a second rotatable member having a drive shaft (13) and a tubular member (241) which comprises a flange portion (242) extending from an outer peripheral surface thereof and being secured to an outer axial end portion of said drive shaft (13) by forcible insertion, an armature plate (26) of magnetic material connected to said flange portion (242) of said tubular member (241) so that said annular armature plate (26) is capable of limited axial movement, said annular armature plate (26) facing said axial end plate (153) of said first rotatable member with an axial air gap (ℓ) therebetween and electromagnetic means (20) associated with said first rotatable member for attracting said armature plate (26) into contact with said axial end plate (153) such that the rotation of said first rotatable member can be transmitted to said second rotatable member through said annular armature plate when said electromagnetic means is activated, said flange portion (242) of said tubular member (241) comprising a plurality of holes (242a) having a female screw region in its inner peripheral surface serving for the insertion of detaching means for detaching said tubular member (241) from said drive shaft (13),
characterized by means (40) for blocking water entering from the outside of said electromagnetic clutch through said holes (242a), said means being an annular member (40) fixedly disposed at the inner surface of said flange portion (242) of said tubular member (241) so as to cover said holes (242a).

## Patentansprüche

1. Elektromagnetische Kupplung, mit
einem ersten drehbaren Teil mit einer axialen Endplatte (153) aus magnetischem Material, einem zweiten drehbaren Teil mit einer Antriebswelle (13) und einem röhrenförmigen Teil 241, das einen Flanschabschnitt (242) aufweist, der sich von einer äußeren Umfangsoberfläche davon erstreckt und an einem äußeren axialen Endabschnitt der Antriebswelle (13) durch zwangsweises Einführen befestigt ist, einer Ankerplatte 26 aus magnetischem Material, die mit dem Flanschabschnitt (242) des röhrenförmigen Teiles (241) so verbunden ist, daß die ringförmige Ankerplatte (26) eine begrenzte axiale Bewegung durchführen kann, wobei die ringförmige Ankerplatte (26) der axialen Endplatte (153) des ersten drehbaren Teiles mit einem axialen Luftspalt (1) dazwischen zugewandt ist, und einem elektromagnetischen Mittel (20), das mit dem ersten drehbaren Teil verknüpft ist zum Anziehen der Ankerplatte (26) in Kontakt mit der axialen Endplatte 153 derart, daß die Rotation des ersten drehbaren Teiles auf das zweite drehbare Teil durch die ringförmige Ankerplatte übertragen werden kann, wenn das elektromagnetische Mittel aktiviert wird, wobei der Flanschabschnitt (242) des röhrenförmigen Teiles (241) eine Mehrzahl von Löchern (242a) mit einem Innengewindebereich an der inneren Umfangsoberfläche aufweist, die zum Einführen eines Abbaumittels zum Abbauen des röhrenförmigen Teiles (241) von der Antriebswelle (13) dienen,
gekennzeichnet durch Mittel (40) zum Blockieren von Wasser, das von außerhalb der elektromagnetischen Kupplung durch die Löcher (242a) eintritt, wobei das Mittel ein ringformiges Teil (40) ist, das fest an der inneren Oberfläche des Flanschabschnittes (242) des röhrenförmigen Teiles (241) so vorgesehen ist, daß es die Löcher (242a) abdeckt.

## Revendications

1. Embrayage électromagnétique comprenant un premier élément rotatif ayant une plaque d'extrémité axiale (153) en matière magnétique, un deuxième élément rotatif ayant un arbre d'entraînement (13) et un élément tubulaire (241) qui comprend une portion collerette (242) qui fait saillie sur sa surface périphérique extérieure et est fixée à une partie d'extrémité axiale extérieure dudit arbre d'entraînement (13) par emmanchement à force, une plaque d'armature (26) en matière magnétique reliée à ladite portion formant collerette (242) dudit élément tubulaire (141), de sorte que ladite plaque d'armature annulaire (26) est capable d'un mouvement axial limité, ladite plaque d'armature annulaire (26) faisant face à ladite plaque d'extrémité axiale (153) dudit premier élément rotatif, avec interposition d'un entrefer axial (1) entre ces deux éléments, et des moyens électromagnétiques (20) associés audit premier élément rotatif pour attirer ladite plaque d'armature (26) en contact avec ladite plaque d'extrémité axiale (153) de telle manière que la rotation dudit premier élément rotatif puisse être transmise audit deuxième élément rotatif par l'intermédiaire de ladite plaque d'armature annulaire lorsque lesdits moyens électromagnétiques sont activés, ladite partie formant collerette (242) dudit élément tubulaire (241) comprenant une pluralité de trous (242a) ayant une région à filetage femelle dans sa surface périphérique intérieure, qui servent à l'insertion de moyens de séparation servant à détacher ledit élément tubulaire (241) dudit arbre d'entraînement (13),
caractérisé par des moyens (40) destinés à empêcher l'eau d'entrer de l'extérieur dudit embrayage électromagnétique à travers lesdits trous (242a), lesdits moyens comprenant un élément annulaire (40) disposé en position fixe contre la surface intérieure de ladite partie formant collerette (242) dudit élément tubulaire (241) pour recouvrir lesdits trous (242a).
